# EUROPÄISCHE PATENTSCHRIFT

(11) **EP 0 937 873 B1**
(45) Veröffentlichungstag und Bekanntmachung des Hinweises auf die Patenterteilung: **21.11.2001**
(21) Anmeldenummer: 99100626.3
(22) Anmeldetag: 14.01.1999
(51) Int. Cl.: F01N 7/18, F16L 23/18

(54) **Anschlussvorrichtung für ein Abgasrohr einer Brennkraftmaschine**
Connection device for an exhaust pipe of an internal combustion engine
Dispositif de connexion pour le conduit d'échappement d'un moteur à combustion interne

(30) Priorität: 20.02.1998 DE 19807312
(43) Veröffentlichungstag der Anmeldung: 25.08.1999
(73) Patentinhaber: Bayerische Motoren Werke Aktiengesellschaft, 80788 München (DE)
(72) Erfinder: Eichmüller, Christian, 81476 München (DE)

(56) Entgegenhaltungen:
- DE-B- 1 219 302
- FR-A- 2 032 044
- US-A- 2 694 583
- US-A- 4 117 674
- US-A- 4 214 444
- US-A- 4 465 287

## Beschreibung

Die Erfindung bezieht sich auf eine Anschlußvorrichtung für ein Abgasrohr einer Brennkraftmaschine.

Aus der DE-A 33 26 260 ist ein aus Rohren aufgebauter Auspuffkrümmer bekannt mit zu den einzelnen Zylindern führenden Abgasrohren, denen jeweils ein Überwurf-Befestigungsflansch zugeordnet ist. Jeder mit einem relativ großen Umfangspiel vom jeweiligen Abgasrohr durchsetzte Überwurfflansch wirkt anschlußseitig auf einen am jeweiligen Rohr vorgesehenen, radial gerichteten Dichtflansch ein. Da der Dichtflansch auf den Überwurfflansch aufliegend vorgesehen ist, ergibt sich in Verbindung mit einem für die gasdichte Anordnung zusätzlich vorgesehenen Dichtelement der Umstand, daß jeder der mit der Brennkraftmaschine über Schraubbolzen verbindbaren Überwurfflansche auf Biegung beansprucht wird. Hierbei kann im Laufe der Betriebszeit und insbesondere bei relativ häufig hohen Temperaturen trotz der Luftspaltisolierung die aus der Verschraubung resultierende Biegebeanspruchung zu einer Verformung des jeweiligen Überwurfflansches führen mit dem Nachteil nachlassender Gasdichtigkeit einerseits und gegebenenfalls unbrauchbar gewordener Überwurfflansche andererseits.

Diese nachteilige Biegebelastung eines Befestigungsflansches für ein Abgasrohr ist mit einer aus der DE-A 42 14 514 bekannten Gestaltung zwar vermieden, jedoch durch einen erheblichen Bauaufwand. Aus diesem Dokument ist ein auf einem Abgasrohr zentriert angeordneter, aus Lamellen aufgebauter Befestigungsflansch bekannt, bei dem ein radial gerichteter Dichtflansch des Abgasrohres in einer angepaßten Vertiefung dieses Befestigungsflansches mit dessen Anlagefläche bündig angeordnet ist. Zur Steigerung der Biegefestigkeit ist jedoch jeder Befestigungsflansch aus einer Vielzahl von relativ dicken Lamellen aufgebaut.

Der Erfindung liegt die Aufgabe zugrunde, für ein Abgasrohr eine leichtbauende Anschlußvorrichtung mit verringerter Temperaturbelastung zur Aufrechterhaltung einer hohen Biegesteifigkeit des Befestigungsflansches aufzuzeigen.

Diese Aufgabe ist mit dem Patentanspruch 1 gelöst. Zwar ist aus der US-A-4,117,674 eine Anschlußvorrichtung für ein Abgasrohr einer Brennkraftmaschine bekannt, bei der das anschlußseitig einen Befestigungsflansch über eine Durchbrechung mit radialem Spiel im wesentlichen zentriert durchsetzende Abgasrohr mit einem radial gerichteten Dichtflansch in einer angepaßten Vertiefung des Befestigungsflansches mit dessen Anlagefläche zumindest bündig angeordnet ist und zwischen einer maschinenseitigen Spannfläche und dem Dichtflansch des Abgasrohres ein Dichtelement vorgesehen ist. Jedoch dient diese bekannte Anschlußvorrichtung einer wirksamen Wärmeübertragung von einem Abgasreaktor auf einen Einsatz im jeweiligen Abgaskanal der Brennkraftmaschine.

Der Vorteil der Erfindung ist in der Anordnung bündiger Auflagen zu sehen und zwar der bündigen Auflage der metallenen Zwischenlage auf der maschinenseitigen Spannfläche einerseits und der bündigen Auflage des Befestigungsflansches auf dieser Zwischenlage andererseits, so daß hiermit im gasdichten Befestigungszustand als freie Biegeträger wirksame Abschnitte des Befestigungsflansches vermieden sind. In diesem Zusammenhang ist von vorteilhafter Ausgestaltung die begrenzte Pressung des Dichtelementes, wobei die Dichtwirkung hierbei mittels einem geringfügig über die Anlagefläche des Befestigungsflansches vorstehenden Dichtflansch erhöht wird. Ferner ist mit der vorstehend beschriebenen bündigen Anordnung auch die Temperaturbelastung dadurch erniedrigt, daß die aus dem Dichtflansch des Abgasrohres in den Befestigungsflansch übertretende Wärme mittels der bündigen Anordnung mit der metallenen Zwischenlage die Wärme zur maschinenseitigen, gekühlten Spannfläche zumindest teilweise abgeführt ist.

Die vorbeschriebene erfindungsgemäße Ausgestaltung erlaubt es in vorteilhafter Weise, den Befestigungsflansch aus einer Leichtmetall-Legierung als Gußteil auszugestalten. Damit ist in vorteilhafter Weise ein leichtbauender Befestigungsflansch von geringerer Wärmekapazität erzielt, aus dem ein Teil der aufgenommenen Wärme in Richtung gekühlter Spannfläche der Brennkraftmaschine abfließt.

Eine einfache Montage der Anschlußvorrichtung ist femer mit dem ringförmig gestalteten Dichtelement erzielt, das über einen Innenbördel an einem spannflächenseitig vorgesehenen Deckblech mit entsprechenden Öffnungen für Befestigungsmittel relativ zum Dichtflansch positioniert ist, wobei ferner auf dem Deckblech zur Pressungsbegrenzung des Dichtelementes die Zwischenlage angeordnet ist.

Die Erfindung ist anhand eines in der Zeichnung dargestellten Ausführungsbeispiels beschrieben. Es zeigt
- Figur 1: die erfindungsgemäße Anschlußvorrichtung vor der Befestigung, und
- Figur 2: die Anschlußvorrichtung im befestigten Zustand.

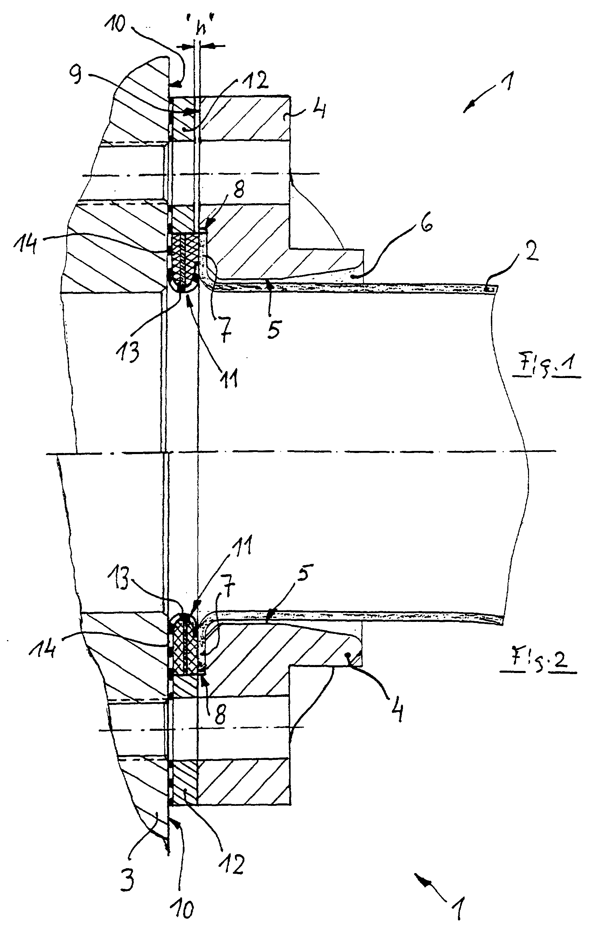

Bei einer in den Figuren 1 und 2 in unterschiedlichen Montagezuständen gezeigten Anschlußvorrichtung 1 für ein lediglich abschnittsweise dargestelltes Abgasrohr 2 einer nicht näher gezeigten Brennkraftmaschine 3 ist das anschlußseitig einem Befestigungsflansch 4 über eine Durchbrechung 5 mit radialem Spiel 6 im wesentlichen zentriert durchsetzende Abgasrohr 2 mit einem radial gerichteten Dichtflansch 7 in einer angepaßten Vertiefung 8 des Befestigungsflansches 4 mit dessen Anlagefläche 9 zumindest bündig, vorzugsweise mit kleinem Überstand von ca. 0,1 bis 0,2 mm angeordnet. Weiter istzwischen einer maschinenseitigen, gekühlten Spannfläche 10 und dem Dichtflansch 7 des Abgasrohres 2 ein um ein vorbestimmtes Maß "h" preßbares Dichtelement 11 vorgesehen, wobei die Pressung mittels einer zwischen Befestigungsflansch 4 und Spannfläche 10 als Wärmebrücke dienenden, metallenen Zwischenlage 12 begrenzt ist.

Diese wie vorstehend erfindungsgemäß beschriebene Anschlußvorrichtung 1 kennzeichnet sich durch eine verringerte Temperaturbelastung mit dem Vorteil der Aufrechterhaltung einer hohen Biegesteifigkeit des Befestigungsflansches 4 und ermöglicht daraus resultierend die weitere vorteilhafte Ausgestaltung des Befestigungsflansches 4 aus einer Leichtmetall-Legierung, vorzugsweise für die Ausgestaltung als Gußteil aus Gußaluminium G-AIMg3Si.

Im Hinblick auf eine einfache Montage ist ein ringförmig gestaltetes Dichtelement 11 über einen Innenbördel 13 an einem spannflächenseitig vorgesehenen Deckblech 14 mit entsprechenden Öffnungen für Befestigungsmittel relativ zum Dichtflansch 7 positioniert, wobei ferner auf dem Deckblech 14 zur Pressungsbegrenzung des Dichtelementes 11 die Zwischenlage 12 angeordnet ist.

## Patentansprüche

1. Anschlußvorrichtung für ein Abgasrohr einer Brennkraftmaschine
- bei der das anschlußseitig einen Befestigungsflansch (4) über eine Durchbrechung (5) mit radialem Spiel (6) im wesentlichen zentriert durchsetzende Abgasrohr (2) mit einem radial gerichteten Dichtflansch (7) in einer angepaßten Vertiefung (8) des Befestigungsflansches (4) mit dessen Anlagefläche (9) zumindest bündig angeordnet ist, und
- zwischen einer maschinenseitigen, gekühlten Spannfläche (10) und dem Dichtflansch (7) des Abgasrohres (2) ein ringförmiges um ein vorbestimmtes Maß (h) preßbares Dichtelement (11) vorgesehen ist,
- das über einen Innenbördel (13) an einem spannflächenseitig vorgesehenen Deckblech (14) mit entsprechenden Öffnungen für Befestigungsmittel relativ zum Dichtflansch (7) positioniert ist, wobei
- ferner auf dem Deckblech (14) zur Pressungsbegrenzung des Dichtelementes (11) zwischen einem Befestigungsflansch (4) aus einer Leichtmetall-Legierung und der Spannfläche (10) eine als Wärmebrücke dienende, metallene Zwischenlage (12) angeordnet ist.

2. Anschlußvorrichtung nach Anspruch 1, **dadurch gekennzeichnet, daß** der Befestigungsflansch (4) als Gußteil gestaltet ist.

3. Anschlußvorrichtung nach Anspruch 2, **dadurch gekennzeichnet, daß** der Befestigungsflansch (4) aus Gußaluminium G-AIMg3Si gebildet ist.

## Claims

1. A connecting device for an exhaust pipe of an internal combustion engine
- wherein the exhaust pipe (2) on the connection side extends substantially centrally with radial clearance (6) through a fastening flange (4) via an aperture (5) and has a radially extending sealing flange (7) disposed in a corresponding recess (8) in the fastening flange (4) so as to be flush at least with the abutment surface (9) of the flange and
- an annular sealing element (11) compressible by a predetermined amount (h) is provided between the sealing surface (7) of the exhaust pipe (2) and a cooled clamping surface (10) on the engine side, and
- is positioned via an inner flange (13) on a cover plate (14) provided on the same side as the clamping surface and with suitable openings for fastening means relative to the sealing surface (7), wherein
- a metal intermediate layer (12) serving as a heat bridge is provided on the cover plate (14) for limiting the compression of the sealing element (11) between the clamping surface (10) and a fastening flange (4) made of a light metal alloy.

2. A connecting device according to claim 1, **characterised in that** the fastening flange (4) is a casting.

3. A connecting device according to claim 2, **characterised in that** the fastening flange (4) is made of cast aluminium G-AIMg₃Si.

## Revendications

1. Dispositif de connexion pour un conduit d'échappement d'un moteur à combustion interne, dans lequel :
- le conduit d'échappement (2), du côté de la connexion, traverse la bride de fixation (4) en étant sensiblement centré avec un jeu radial (6) par rapport à une ouverture de passage (5) et présente une bride d'étanchéité (7), dirigée radialement, logée dans un creux ajusté (8) de la bride de fixation (4) et en affleurement au moins avec la portée d'appui (9) de cette bride,
- entre une portée de serrage (10) refroidie, située du côté du moteur et la bride d'étanchéité (7) du conduit d'échappement (2), il est prévu un élément d'étanchéité (11) qui peut être comprimé d'une quantité donnée (h),
- par rapport à la bride d'étanchéité (7), l'élément d'étanchéité (11) est positionné par l'intermédiaire d'un collet rabattu (13), sur une tôle de couverture (14) prévue du côté de la portée de serrage et percée d'ouvertures de passage de moyens de fixation, et
- de plus afin de limiter la compression de l'élément d'étanchéité (11) une couche intercalaire (12) métallique, servant de pont thermique, est montée sur le boîtier de couverture (14) entre la bride de fixation (4) en alliage de métal léger et la portée de serrage (10).

2. Dispositif selon la revendication 1,
**caractérisé en ce que**
la bride de fixation (4) est une pièce coulée.

3. Dispositif selon la revendication 2,
**caractérisé en ce que**
la bride de fixation (4) est en alliage d'aluminium coulé G-AlMg3Si.
